(19) Europäisches Patentamt

European Patent Office

Office européen des brevets

(11) EP 1 522 924 A2

(12) EUROPEAN PATENT APPLICATION

(43) Date of publication:
13.04.2005 Bulletin 2005/15

(51) Int Cl.⁷: G06F 9/48

(21) Application number: 03021619.6

(22) Date of filing: 25.09.2003

(84) Designated Contracting States:
AT BE BG CH CY CZ DE DK EE ES FI FR GB GR
HU IE IT LI LU MC NL PT RO SE SI SK TR
Designated Extension States:
AL LT LV MK

(30) Priority: 23.07.2003 KR 2003050708

(71) Applicant: LG ELECTRONICS INC.
Seoul (KR)

(72) Inventor: Park, Moon-Ju
Seoul (KR)

(74) Representative: von Hellfeld, Axel, Dr. Dipl.-Phys.
Wuesthoff & Wuesthoff
Patent- und Rechtsanwälte
Schweigerstrasse 2
81541 München (DE)

(54) **Improved EDF scheduling method**

(57) An EDF scheduling method comprising the steps of: checking the number of tasks to be scheduled; allocating priorities to the tasks; updating current time as the lowest priority; and processing the tasks in a shortest-deadline-first order from the updated lowest priority on a temporal axis. A time indicator for indicating the lowest priority level is set in current time and corresponding tasks are searched towards a clockwise direction thus to process the firstly searched task firstly, thereby minimizing a runtime overhead by a priority re-allocation.

## FIG. 3

$M=2^k-1$
W : WORD LENGTH

**Description**

BACKGROUND OF THE INVENTION

1. Field of the Invention

The present invention relates to a real time scheduling, and more particularly, to an EDF scheduling method for performing a priority allocation in a constant time complexity.

2. Description of the Related Art

Recently, with a rapid growth of a computer and a computer network system technique, various real time multimedia applications are being shown. Also, as the real time applications become more sophisticated and complicated, many researches for a real time scheduling are being performed in order to improve a performance and a reliability of a system.

Among several well-known scheduling techniques, a rate monotonic (RM) and an earliest deadline first (EDF) algorithm are evaluated to be suitable for a multimedia scheduling.

Especially, the EDF algorithm is regarded as an optimum scheduling algorithm in that a system utilization degree is 100%. However, due to an unstable characteristic at the time of a temporary overload and a complicated realization characteristic, a fixed priority algorithm such as the RM is being utilized much more.

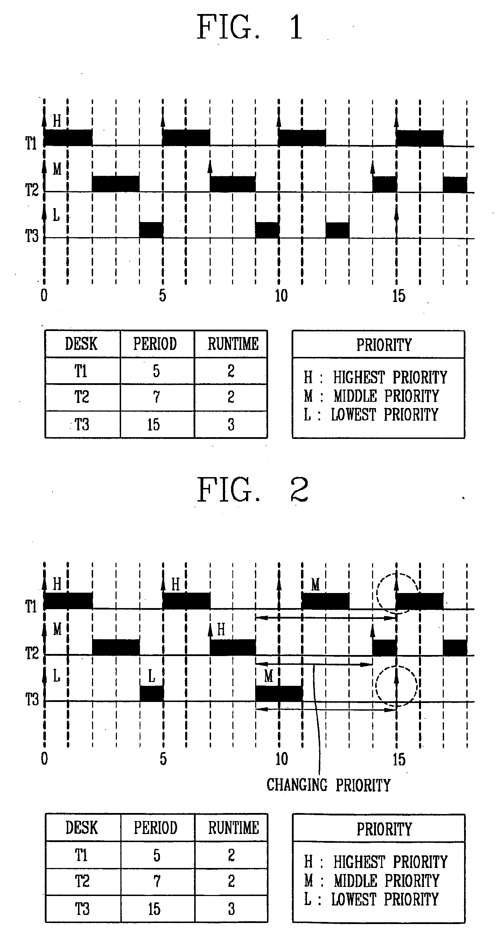

Figures 1 and 2 are exemplary views for respectively explaining an RM scheduling and an EDF scheduling in accordance with the conventional art, in which three tasks (T1, T2, and T3) respectively having different period and runtime are scheduled according to an RM algorithm and an EDF algorithm.

In case of the RM scheduling, the shorter a period is, the higher priority is allocated to a task. As shown in Figure 1, the task T1 having a period of 5 is allocated with the highest priority H, the task T2 having a period of 7 is allocated with a middle priority M, and the task T3 having a period of 15 is allocated with the lowest priority L. In the RM scheduling, once priorities are allocated to the tasks, the priorities are not changed even if time elapses.

On the contrary, in case of the EDF scheduling, priorities of the tasks are determined by deadlines of the tasks. That is, a task having the shortest deadline in current time is allocated with the highest priority. According to this, as shown in Figure 2, in time '0', the task T1 having time of 5 up to a deadline is allocated with the highest priority H, the task T2 having time of 7 up to a deadline is allocated with a middle priority M, and the task T3 having time of 15 up to a deadline is allocated with the lowest priority L. However, in time '9', remaining time up to the deadline of the tasks T1 and T3 are respectively 6 and remaining time up to the deadline of the task T2 is 5, so that priorities of the tasks are changed.

Operating systems which support said EDF scheduling generally use a list structure or a data structure of a heap form. Herein, if the number of tasks or messages of a system is N, a linear time O(N) is required when a scheduler selects a task or a message to be scheduled next.

However, in a real time network requiring a predictable runtime and having no long allowance time or in a real time mounted type system, a scheduler of a linear time complexity is not desirable and a constant time scheduling is required.

To this end, an improved priority allocation method in the EDF was disclosed in A. Mesh et.al's thesis of "Earliest Deadline Message Scheduling with Limited Priority Inversion". A basic concept of said Mesh's priority allocation method is to convert a deadline of current tasks or messages into a logarithmic scale and thereby allocate priorities. In said Mesh's priority allocation method, if new task or message is not added, a new priority allocation is not required, thereby performing a schedule in constant time. However, in an environment where a dynamic task is frequently generated and annihilated by a user's demand, the linear time complexity still exists.

SUMMARY OF THE INVENTION

Therefore, an object of the present invention is to provide an EDF scheduling method capable of minimizing a runtime overhead.

Another object of the present invention is to provide an EDF scheduling method capable of minimizing a runtime overhead by making a priority allocated to one task not be changed as time elapses and thereby removing a runtime overhead generated by a priority re-allocation.

To achieve these and other advantages and in accordance with the purpose of the present invention, as embodied and broadly described herein, there is provided an EDF scheduling method comprising the steps of: checking the number of tasks to be scheduled; allocating priorities to the tasks; updating current time as the lowest priority; and processing the tasks in a shortest-deadline-first order from the updated lowest priority on a temporal axis.

In the present invention, it is determined that the number of tasks to be scheduled is less than the number $2^k$ of a priority level. If the number of the tasks is less than that of the priority level, a priority of each task is determined as a value obtained by dividing a value obtained by dividing a deadline $d_i$ of a corresponding task by a maximum deadline $T_{max}$ by a specific time unit q. The maximum deadline is a relative deadline of a task having the longest period among the tasks, and the specific time unit is a value obtained by dividing the maximum deadline by the number of a priority level.

The current time is indicated by a current time indicator obtained by dividing a value obtained by dividing current time by the maximum deadline by the specific time unit.

In the EDF scheduling method according to another aspect of the present invention, if the number of the tasks is more than the number of a priority level, the tasks are grouped into several sets and one current time indicator is set to each task set.

A priority level $(P_i)$ of a task having a deadline which is in a range of $2^{m-1}T_{min} \sim 2^m T_{min}$ is obtained by a formula of

$$(m-1)x + \left\lceil \frac{d_i \bmod 2^m T_{min}}{q(m)} \right\rceil,$$

wherein the q(m) denotes a time unit relevant to the $m^{th}$ time indicator, the x denotes the number of a priority level relevant to each current time indicator, and the $d_i$ denotes a deadline of a corresponding task. Herein, the number of the current time indicator is

$$\left\lceil \frac{2^k}{x} \right\rceil.$$

A value of the $m^{th}$ time indicator, C(m) is updated by a formula of

$$\left\lceil \frac{(current\ time) \bmod 2^m T_{min}}{q(m)} \right\rceil.$$

The EDF scheduling method of the present invention includes a priority allocation method in case of an abundant priority level or a limited priority level and a schedulability test method at the time of applying the EDF scheduling method.

The foregoing and other objects, features, aspects and advantages of the present invention will become more apparent from the following detailed description of the present invention when taken in conjunction with the accompanying drawings.

BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:

Figure 1 is an exemplary view for explaining a rate monotonic (RM) scheduling in accordance with the conventional art;

Figure 2 is an exemplary view for explaining an EDF scheduling in accordance with the conventional art;

Figure 3 is a conceptual view showing a bitmap structure applied to an EDF scheduling method of the present invention;

Figure 4A is an exemplary view for explaining priorities of respective tasks in time '0' according to an EDF scheduling method of the present invention;

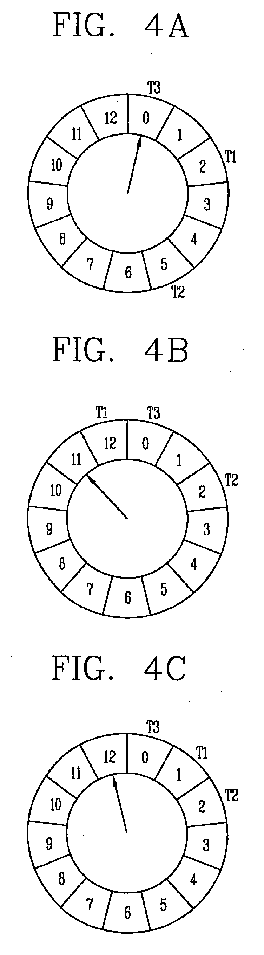

Figure 4Bis an exemplary view for explaining priorities of each task in time '11' according to an EDF scheduling method of the present invention; and

Figure 4C is an exemplary view for explaining priorities of each task in time '12' according to an EDF scheduling method of the present invention.

## DETAILED DESCRIPTION OF THE PREFERRED EMBODIMENTS

Reference will now be made in detail to the preferred embodiments of the present invention, examples of which are illustrated in the accompanying drawings.

In the present invention, a temporal axis is divided into a quantum unit, then a priority and a time indicator for indicating current time of each task are calculated thus to be mapped in a bitmap, and the time indicator is periodically updated, thereby scheduling the tasks by a relative priority for the time indicator without a priority re-allocation process of the tasks.

The quantum (q) is calculated by dividing the longest deadline among deadlines of tasks to be scheduled by the number $2^k$ of a priority level, and expressed as a following formula 1.

$$q = \frac{T_{max}}{2^k} \qquad \text{<formula 1>}$$

Herein, the $T_{max}$ denotes a maximum deadline, and the k denotes the number of bits allocated for a priority level.

A priority level of each task ($P_i$) is calculated by a following formula 2.

$$\left\lceil \frac{d_i \bmod T_{max}}{q} \right\rceil \dots\dots\dots\dots\dots\text{<formula 2>}$$

Herein, $d_i$ denotes a deadline of a corresponding task.

Also, the time indicator C is updated by a following formula 3 whenever current time of a system is updated.

$$\left\lceil \frac{(current\ time) \bmod T_{max}}{q} \right\rceil \dots\dots\dots\dots\text{<formula 3>}$$

Herein, the current_time denotes current time of a system.

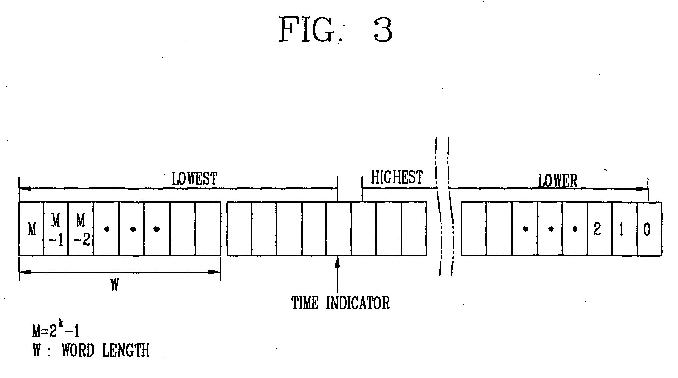

Figure 3 is a conceptual view showing a bitmap structure applied to the EDF scheduling method of the present invention. Once priorities of tasks to be scheduled are determined by using the formulas 1 and 2, a corresponding priority bit is set to the bitmap and the time indicator is periodically updated by the formula 3.

Hereinafter, a case that three tasks (T1, T2, and T3) are scheduled by the scheduling method of the present invention will be explained with reference to Figures 4A to 4C.

Figures 4A to 4C are exemplary views for explaining that a priority of each task is determined as time elapses.

As shown in Figure 4A, the T1 having a period of 2, the T2 having a period of 5, and the T3 having a period of 15 reach to a scheduler in time '0', the scheduler determines priorities of the tasks by using the formulas 1 and 2. In time '0', the maximum deadline $T_{max}$ of said three tasks is 13 which is equal to the period of the T3, 13 priority levels exist, and by the formula 2, deadlines $d_1$, $d_2$, and $d_3$ of the T1, T2, and T3 are respectively 2, 5, and 0 and by the formula 3, the time indicator indicates '0'. A priority level of time that the time indicator indicates is the lowest, and priority levels become lower towards a clockwise direction.

In time '11', as shown in Figure 4B, the time indicator indicates time 11, and relative deadlines of the T1, T2, and T3 become 1, 4, and 2, respectively by the formula 2. According to this, in time '11', the tasks are processed in an order of T1, T3, and T2.

In time '12', as shown in Figure 4C, the time indicator indicates time 12, and relative deadlines of the T1, T2, and T3 become 2, 3, and 1, respectively by the formula 2. According to this, in time '12', the tasks are processed in an order of T3, T1, and T2.

As aforementioned, the EDF scheduling method according to the present invention is based on a priority setting method in the EDF scheduling. Differently from the conventional EDF scheduling where priorities are re-allocated by yielding relative deadlines of tasks in current time, in the present invention, a time indicator for indicating the lowest priority level is set in current time and corresponding tasks are searched towards a clockwise direction thus to process the firstly searched task firstly, thereby minimizing a runtime overhead by a priority re-allocation.

In a real circumstance, since the number of the priority level is limited, the number of the tasks can be more than the number of allocable priorities. In this case, an efficient EDF scheduling is possible by applying a plurality of time indicators.

Hereinafter, another embodiment of the present invention will be explained. In a second embodiment of the present invention, when it is supposed that the shortest deadline among deadlines of tasks to be scheduled is $T_{min}$ and the longest deadline is $T_{max}$, a quantum $q(m)$ relevant to the $m^{th}$ time indicator is obtained by a following formula 4.

$$q(m) = \frac{2^m\, T_{min}}{x} \qquad \text{<formula 4>}$$

Herein, the x denotes the number of a priority level relevant to each time indicator and is obtained by a following formula 5.

$$x = \left\lceil \frac{2^k}{\log_2 \dfrac{T_{max}}{T_{min}}} \right\rceil \quad\ldots\ldots\ldots\ldots\ldots \text{<formula 5>}$$

Herein, the k denotes the number of a priority level bit.

A priority $(P_i)$ of a task having a deadline which is in a range of $2^{m-1}T_{min} \sim 2^m T_{min}$ is obtained by a following formula 6.

$$(m-1)x + \left\lceil \frac{d_i \bmod 2^m\, T_{min}}{q(m)} \right\rceil \quad\ldots\ldots\ldots\ldots \text{<formula 6>}$$

Herein, the time indicator is maintained as

$$\left\lceil \frac{2^k}{x} \right\rceil,$$

and when current time is updated, the $m^{th}$ time indicator $C(m)$ is updated by a following formula 7.

$$C(m) = \left\lceil \frac{(current\ time) \bmod 2^m\, T_{min}}{q(m)} \right\rceil \quad\ldots\ldots\ldots \text{<formula 7>}$$

In the present invention, a system using rate for a case that the priority level is enough and a case that the priority level is not enough is yielded thus to test a schedulability of each case. Herein, the system using rate denotes a total sum of values obtained by dividing processing time of tasks or messages by their deadlines.

Accordingly, in case that the number of a priority bit is k, if a system using rate is $1-\dfrac{1}{2^k}\times\dfrac{T_{max}}{T_{min}}$ or less than that, a scheduling is possible. Also, in case that k is not enough, if a system using rate is

$$1-\cfrac{2}{\left[\cfrac{2^k}{\left[\log_2\dfrac{T_{max}}{T_{min}}\right]}\right]}$$

or less than that, a scheduling is possible.

As aforementioned, according to the EDF scheduling method of the present invention, a time indicator indicating the lowest priority level is set in current time, and corresponding tasks are searched towards a clockwise direction thus to process the first searched task firstly, thereby enabling a scheduling in a constant time complexity without changing priorities allocated to each task.

Also, in case that a priority level is not enough, a plurality of time indicators are set thus to expand a deadline range, thereby maximizing a system using rate.

Moreover, according to the EDF scheduling method of the present invention, allocated priorities are not changed thus to minimize a runtime overhead generated by re-allocating priorities.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalence of such metes and bounds are therefore intended to be embraced by the appended claims.

**Claims**

1. An EDF scheduling method comprising:

   checking the number of tasks to be scheduled;
   allocating priorities to the tasks;
   updating current time as the lowest priority; and
   processing the tasks in a shortest-deadline-first order from the updated lowest priority on a temporal axis.

2. The method of claim 1, wherein it is determined that the number of tasks to be scheduled is less than the number of a priority level.

3. The method of claim 2, wherein the number of a priority level is $2^k$.

4. The method of claim 2 or 3, wherein if the number of tasks is less than that of the priority level, a priority of each task is determined as a value obtained by dividing a value obtained by dividing a deadline $d_i$ of a corresponding task by a maximum deadline $T_{max}$ by a specific time unit q.

5. The method of claim 4, wherein the maximum deadline is a relative deadline of a task having the longest period among the tasks.

6. The method of claim 4, wherein the specific time unit is a value obtained by dividing the maximum deadline by the number of a priority level.

7. The method of claim 4, wherein the current time is indicated by a current time indicator.

**8.** The method of claim 7, wherein the current time indicator is a value obtained by dividing a value obtained by dividing current time of a system by the maximum deadline by the specific time unit.

**9.** The method of claim 2 or 3, wherein if the number of tasks is less than the number of a priority level, a priority of each task ($P_i$) is calculated by a following formula of

$$\left[ \frac{d_i \bmod T_{max}}{q} \right],$$

in which the $d_i$ denotes a deadline of a corresponding task, $T_{max}$ denotes a maximum deadline, and the q denotes a specific time unit.

**10.** The method of claim 9, wherein the $T_{max}$ is a relative deadline of a task having the longest period among tasks.

**11.** The method of claim 10, wherein the specific time unit is calculated by a formula of $q = \dfrac{T_{max}}{2^k}$.

**12.** The method of claim 11, wherein current time is updated by a formula of

$$\left[ \frac{(current\ time) \bmod T_{max}}{q} \right],$$

and the current_time is current time of a system.

**13.** The method of claim 2 or 3, wherein if the number of tasks is more than the number of a priority level, tasks are grouped into several task sets.

**14.** The method of claim 13, wherein one current time indicator is set to each task set.

**15.** The method of claim 14, wherein a priority ($P_i$) of a task having a deadline which is in a range of $2^{m-1}T_{min} \sim 2^m T_{min}$ is obtained by a following formula of

$$(m-1)x + \left[ \frac{d_i \bmod 2^m T_{min}}{q(m)} \right],$$

wherein the q(m) denotes a time unit relevant to the $m^{th}$ time indicator, the x denotes the number of a priority level relevant to each current time indicator, and the $d_i$ denotes a deadline of a corresponding task.

**16.** The method of claim 15, wherein the number of the current time indicator is

$$\left[ \frac{2^k}{x} \right].$$

**17.** The method of claim 16, wherein a value of the $m^{th}$ time indicator, C(m) is updated by a following formula of

$$\left[ \frac{(current\ time) \bmod 2^m\ T_{\min}}{q(m)} \right].$$

# FIG. 1

| DESK | PERIOD | RUNTIME |
|---|---|---|
| T1 | 5 | 2 |
| T2 | 7 | 2 |
| T3 | 15 | 3 |

| PRIORITY |
|---|
| H : HIGHEST PRIORITY |
| M : MIDDLE PRIORITY |
| L : LOWEST PRIORITY |

# FIG. 2

CHANGING PRIORITY

| DESK | PERIOD | RUNTIME |
|---|---|---|
| T1 | 5 | 2 |
| T2 | 7 | 2 |
| T3 | 15 | 3 |

| PRIORITY |
|---|
| H : HIGHEST PRIORITY |
| M : MIDDLE PRIORITY |
| L : LOWEST PRIORITY |

# FIG. 3

M=2^k-1
W : WORD LENGTH

FIG. 4A

FIG. 4B

FIG. 4C